# EUROPÄISCHE PATENTSCHRIFT

(11) **EP 0 753 089 B1**
(45) Veröffentlichungstag und Bekanntmachung des Hinweises auf die Patenterteilung: **03.06.1998**
(21) Anmeldenummer: 95930318.1
(22) Anmeldetag: 21.03.1995
(51) Int. Cl.: D04H 13/00

(54) **VERFAHREN ZUM ANNÄHEN EINES DRAHTNETZES AN EINE MINERALWOLLEMATTE**
METHOD OF BINDING WIRE NETTING TO A MINERAL WOOL MAT
PROCEDE DE LIAGE D'UN TREILLIS METALLIQUE A UN MAT EN LAINE MINERALE

(30) Priorität: 30.03.1994 DE 4411034
(43) Veröffentlichungstag der Anmeldung: 15.01.1997
(73) Patentinhaber: Deutsche Rockwool Mineralwoll-GmbH, 45966 Gladbeck (DE)
(72) Erfinder: MICHEL, Norbert, D-86643 Rennertshofen (DE); BALLMANN, Hartmut, D-86633 Neuburg (DE); RESCH, Hans, D-86668 Karlshuld (DE)
(74) Vertreter: Wanischeck-Bergmann, Axel, Dipl.-Ing.
(86) Internationale Anmeldenummer: EP9501049
(87) Internationale Veröffentlichungsnummer: WO9527095

(56) Entgegenhaltungen:
- DE-U- 9 315 083
- DE-U- 9 410 133
- FR-A- 2 628 448
- GB-A- 1 291 568
- US-A- 5 074 129

## Beschreibung

Die Erfindung bezieht sich auf ein Verfahren zum Annähen eines Drahtnetzes an eine Mineralwollematte, wobei ein Nähdraht je Naht in einem Steppstich jeweils unter Bildung einer Schlinge durch die Mineralwollematte und das Drahtnetz geführt wird.

Die in der Fachwelt als Drahtnetzmatten bekannten Produkte bestehen im wesentlichen aus einer verhältnismäßig dicken Mineralwollematte, die einseitig mit einem Drahtnetz versehen ist. Diese Drahtnetzmatten dienen dem Brand-, Wärme- und Schallschutz. Insbesondere wenn die Mineralwolle aus Steinwolle besteht, ergibt sich eine sehr hohe Temperatur- und Feuchtigkeitsbeständigkeit. Die Einsatzbereiche derartiger Drahtnetzmatten sind vielseitig. Es seien hier nur die wichtigsten Bereiche genannt, nämlich Einsatz in der Kraftwerktechnik, in Industrieanlagen, bei Fernwärmeanlagen, insbesondere zur Dämmung von Fernwärmerohren, im Schiffbau und in der Haustechnik.

Es ist bekannt, das Drahtnetz einseitig an die betreffende Mineralwollematte anzunähen. Man geht so vor, daß ein Drahtnetz von einer Rolle abgewickelt und die Mineralwollematte daraufgebracht wird. Das Drahtnetz mit der daraufliegenden Mineralwollematte wird dann kontinuierlich einer Vielnadelnähmaschine zugeführt, so daß in Längsrichtung bzw. in Förderrichtung mehrere Nähte mit Abstand voneinander gebildet werden. Zum Nähen kann man keine üblichen Nähmaschinen verwenden, wie sie zum Nähen von Textilien eingesetzt sind, allein schon wegen der Dicke des Nähgutes und wegen dessen besonderer Eigenschaften. Außerdem kann man kein textiles Garn verwenden, weil dadurch der Brandschutz nicht mehr gewährleistet wäre. Zum Nähen werden daher Nähdrähte verwendet, die je nach Forderungen aus der Praxis, insbesondere aufgrund der gegebenen Witterungsverhältnisse, aus einfachem Bindedraht oder einem nichtrostenden Material, z.B. einem austenitischen Stahl, bestehen. Diese Nähdrähte haben materialbedingt nur eine begrenzte Biegsamkeit, d.h. man kann sie nicht so verknüpfen, wie dies bei textilem Nähgarn möglich ist. Außerdem kann man nur mit einem Oberdraht nähen, im Gegensatz zu textilen Nähmaschinen, die üblicherweise mit Ober- und Unterfaden arbeiten. Es kommt hinzu, daß sich bei Mineralwollematten im Bereich der Vielnadelnähmaschine ein gewisser Anfall an Abrieb oder Staub nicht vermeiden läßt, wodurch die recht komplizierten Vorrichtungen für die Unterfadenführung bei Textilnähmaschinen beeinträchtigt würden.

Aus den zuvor genannten Gründen ist es beim Annähen eines Drahtnetzes an einer Mineralwollematte üblich, die Nähte in einem einfachen Steppstich auszuführen. Dabei dringt die Nadel durch die Mineralwollematte und das Drahtnetz hindurch. Im Moment des Zurückgehens der Nadel bildet sich seitlich des Nadelöhrs eine Drahtschlaufe, in die ein Greiferhaken eingreift und während des Weiterbewegens der Mineralwollematte eine Schlinge auszieht. Beim nächsten Stich tritt dann die Nadel wieder durch die Schlinge hindurch, wonach der Greiferhaken wieder eine Schlinge auszieht usw. Dieser verhältnismäßig einfache Nähvorgang wiederholt sich über die gesamte Länge der einzelnen parallel zueinander verlaufenden Nähte.

Die zuvor erläuterte einfache Steppstichnaht hat den wesentlichen Nachteil, daß sie sich leicht auflösen läßt. In einem rauhen Baustellenbetrieb, in dem große Mengen von Drahtnetzmatten verarbeitet werden, insbesondere beim Transport durch Kräne od. dgl., lösen sich immer wieder Teile des Drahtnetzes. Auf der Baustelle kann man dann die aufgelösten Steppstichnähte nicht reparieren, sondern ist normalerweise gezwungen, Teile der Mineralwollematte mit entsprechenden Teilen des Drahtnetzes abzuschneiden, wodurch ein erheblicher Materialverlust und auch Abfall entsteht.

Der Erfindung liegt daher die Aufgabe zugrunde, ein Verfahren zu schaffen, durch welches die beständige Verbindung zwischen Drahtnetz und Mineralwollematte gewährleistet ist.

Die gestellte Aufgabe wird erfindungsgemäß dadurch gelöst, daß der Nähdraht nach der Bildung der Steppstichnaht im Bereich der unteren / oder oberen großen Oberfläche der Mineralwollebahn schrittweise derart mechanisch verformt wird, daßein Auflösen der Steppstichnaht verhindert wird.

Vorteilhafte Ausgestaltungen des erfindungsgemäßen Verfahrens ergeben sich aus den Unteransprüchen 2 bis 9.

Die Erfindung betrifft ferner eine Vorrichtung zur Durchführung des Verfahrens, welche dadurch gekennzeichnet ist, daß je Steppstichnaht im Bereich der unteren / oder oberen großen Oberfläche der Mineralwollebahn ein Werkzeug angeordnet ist, welches derart gestaltet ist, daß der Nähdraht schrittweise so mechanisch verformbar ist, daß ein Auflösen der Steppstichnaht verhindert wird.

Vorteilhafte Ausgestaltungen der Vorrichtung sind in den Unteransprüchen 11 bis 17 gekennzeichnet.

In der Zeichnung sind Ausführungsbeispiele der Erfindung im Schema dargestellt, und zwar zeigen
Figur 1 eine perspektivische Ansicht im wesentlichen auf die Unterseite eines Ausschnittes einer Mineralwollematte mit anliegendem Drahtnetz,
Figur 2 eine Ansicht auf die Unterseite von zwei parallel nebeneinander geführten Mineralwollebahnen,
Figur 3 einen Vertikalschnitt gemäß Schnittlinie III-III in Figur 2,
Figur 4 einen Längsschnitt gemäß Schnittlinie IV-IV in Figur 2,
Figur 5 eine Ansicht auf die Unterseite eines Teiles der Mineralwollebahn mit einer anderen Ausgestaltung,
Figur 6 einen Teilschnitt gemäß Schnittlinie VI-VI in Figur 5 in einer Betriebsstellung und
Figur 7 einen Teilschnitt gemäß Figur 6 in einer anderen Betriebsstellung.

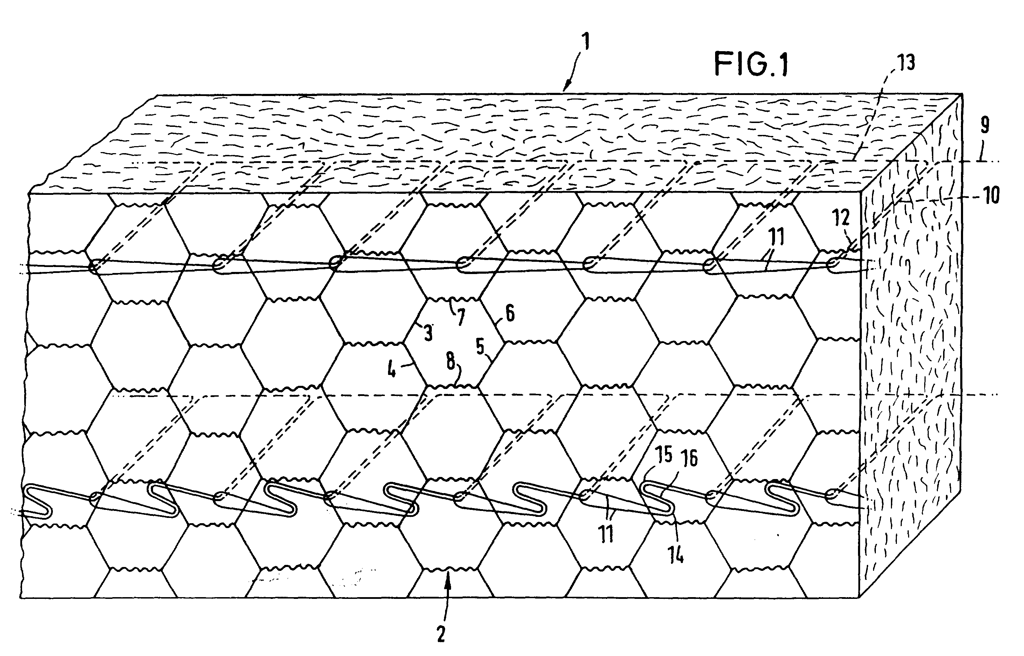

Figur 1 zeigt in Perspektive einen Ausschnitt aus einer Mineralwollebahn 1, auf deren Unterseite ein Drahtnetz 2 angelegt ist. Das Drahtnetz 2 besteht vorteilhafterweise aus sechseckigen Maschen mit den Drahtteilen 3, 4, 5, 6, 7 und 8, wobei die beiden letzteren Drahtteile mit den entsprechenden Drahtteilen der benachbarten Maschen verbunden sind. Im oberen Teil der Figur 1 ist eine übliche Steppstichnaht dargestellt, und zwar ist ein Nähdraht 9 durch die Mineralwollebahn 1 und das Drahtnetz hindurchgeführt, wobei im Anschluß an das Drahtteil 10 eine Schlinge 11 gebildet ist, von welcher das Drahtteil 12 wieder an die Oberfläche der Mineralwollebahn zurückgeht. Das Drahtteil 13 führt dann, wie gezeigt, zu dem nächsten Steppstich durch die Schlinge 11, mit Bildung einer anschließenden Schlinge usw.

Im unteren Teil der Figur 1 ist ein Ausführungsbeispiel der Erfindung dargestellt, und zwar ist hier der Nähdraht nach der Bildung der Steppstichnaht im Bereich der unteren großen Oberfläche der Mineralwollebahn 1 schrittweise derart mechanisch verformt, daß ein Auflösen der Steppstichnaht verhindert wird. Die mechanische Verformung wird vorteilhafterweise bei jedem aufeinanderfolgenden Steppstich vorgenommen. Bei diesem Ausführungsbeispiel ist das mechanische Verformen durch Verdrehen jeweils eines Nähdrahtteiles im wesentlichen in einer Ebene parallel zu einer der großen Oberflächen der Mineralwollebahn erfolgt. Nach der mechanischen Verformung sind Bögen 14 und 15 mit einem Zwischenstück 16 gebildet, die gewissermaßen wie Widerhaken wirken und damit ein Ausziehen des Nähdrahtes bzw. ein Auflösen der Steppstichnaht verhindern. Wie in Figur 1 gezeigt, wird das mechanische Verformen vorteilhafterweise jeweils im mittleren Bereich jeder zuvor gebildeten Schlinge 11 vorgenommen.

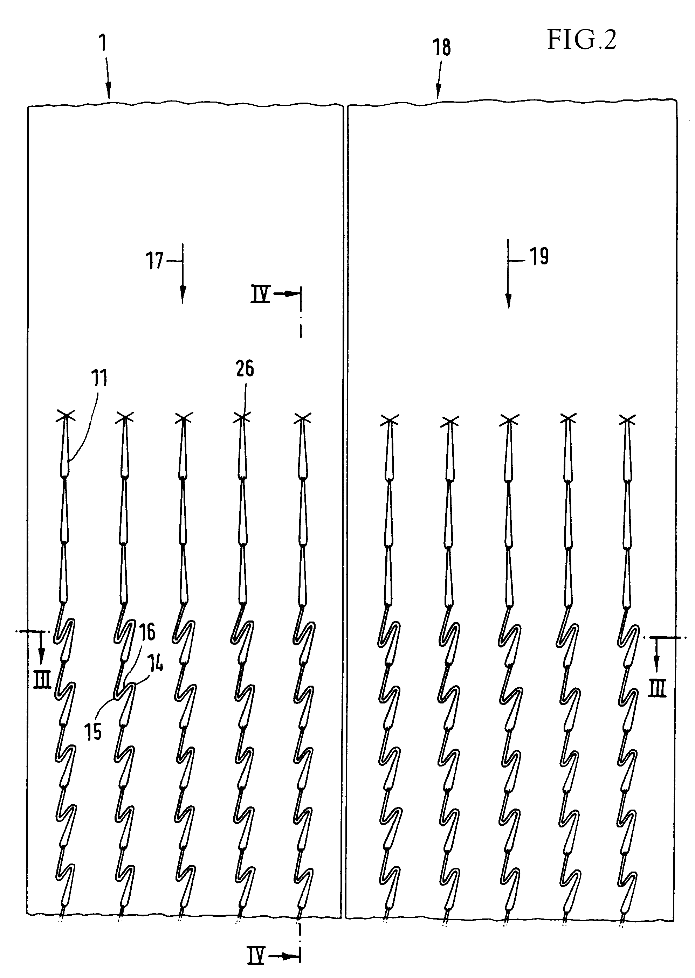

Figur 2 zeigt die Ansicht auf die Unterseite von zwei gleichzeitig nebeneinander geführten Mineralwollebahnen 1 und 18, die in Richtung der Pfeile 17 und 19 kontinuierlich weiterbewegt werden. Mit 26 ist eine Bildungsstelle für die Steppstichnaht bezeichnet, d.h. an dieser Stelle befindet sich eine an sich bekannte Vielnadelnähmaschine mit einem quer zur Längsrichtung der Mineralwollebahnen verlaufenden Nähbalken, an welchem mehrere Nähnadeln befestigt sind, die, wie zu Anfang erläutert, die Steppstichnähte bilden. Bei dem Ausführungsbeispiel nach Figur 2 sind je Mineralwollebahn 1 und 18 fünf parallel zueinander verlaufende Steppstichnähte ausgeführt. Figur 2 zeigt des weiteren, daß das mechanische Verformen vorzugsweise der Schlingen 11 mit Abstand von der Bildungsstelle 26 des Steppstiches vorgenommen wird, so daß sich zwischen der Bildungsstelle und der Verformungsstelle mindestens mehrere Steppstiche befinden. Auf diese Weise wird erreicht, daß das mechanische Verformen keine Rückwirkung auf die zuvor gebildeten Steppstiche hat, d.h. daß durch das mechanische Verformen ein gewisser Zug in Längsrichtung erfolgt, der aber von den Schlingen bis zur Bildungsstelle 26 der Steppstiche aufgenommen wird.

Das mechanische Verformen kann vorteilhafterweise durch einfaches Verdrehen der betreffenden Nähdrahtteile durch Eingriff eines gabelförmigen Werkzeuges vorgenommen werden. Dabei hat es sich als vorteilhaft herausgestellt, daß das gabelförmige Werkzeug jeweils um einen Winkel von 200° bis 260°, vorzugsweise 220°, verdreht wird. Auf diese Weise ergeben sich die beschriebenen hakenartigen Bögen 14 und 15.

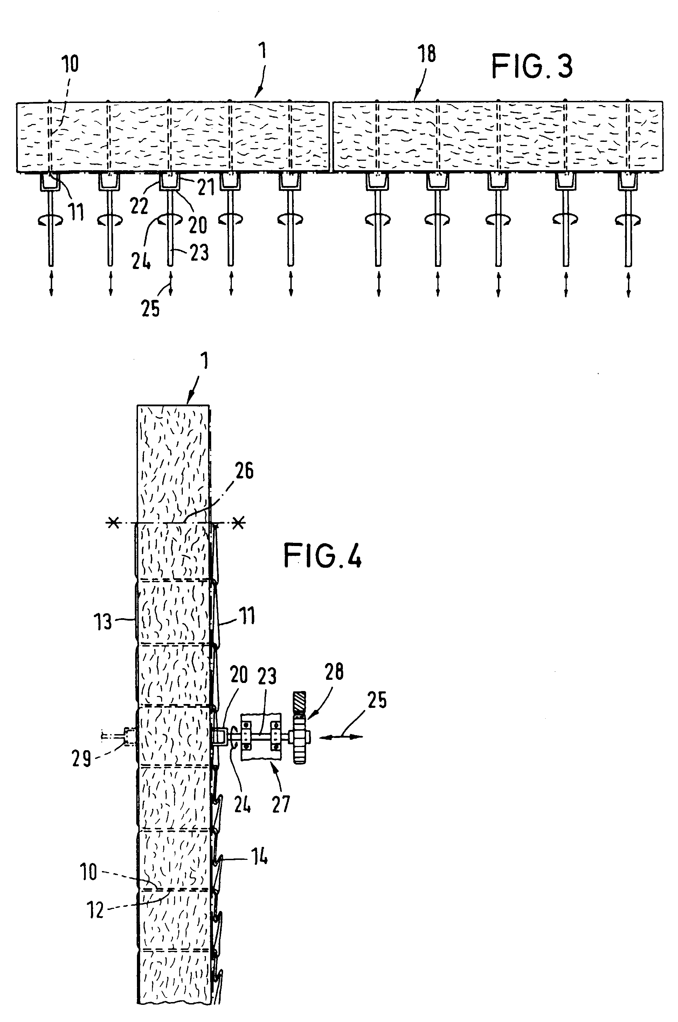

Die Figuren 3 und 4 zeigen ein Ausführungsbeispiel einer vereinfacht dargestellten Vorrichtung mit Werkzeugen, die quer zur Förderrichtung 17, 19 der betreffenden Mineralwollebahnen 1, 18 nebeneinander den einzelnen Steppstichnähten zugeordnet sind. Jedes dieser Werkzeuge weist eine Gabel 20 mit Zinken 21 und 22 auf. Die Zinken greifen zu beiden Seiten des Nähdrahtes ein. Die Gabeln 20 stehen, wie Figur 3 verdeutlicht, zunächst mit ihren Zinken senkrecht bzw. quer zu der betreffenden Naht. Wenn die Gabeln nun in Richtung des Pfeiles 24 zunächst um 90° gedreht werden, kommen die beiden Zinken beiderseitig des Nähdrahtes, vorzugsweise der Schlinge 11, mit dieser in Berührung. Bei Weiterdrehen um vorzugsweise 130° bilden sich dann die beschriebenen hakenförmigen Bögen 14 und 15. Die Gabeln 20 sind, wie Figur 4 verdeutlicht, an jeweils einer Gabelachse bzw. einer Antriebswelle 23 befestigt, die jeweils in Lagern drehbar auf einem Schlitten 27 gehalten ist, wobei die Gabelachse bzw. Antriebswelle 23 am äußeren Ende mit einem vereinfacht dargestellten Antrieb verbunden ist, welcher mitsamt dem Schlitten und der Gabel in Richtung des Pfeiles 25 hin und her verschiebbar ist. Zur Bildung der Verformung wird also das Werkzeug zu der betreffenden Schlinge hin verschoben, worauf die Drehung erfolgt. Danach wird das Werkzeug zurückgezogen bis die nächste Schlinge vor dem Werkzeug liegt, so daß sich dieser Vorgang taktweise immer wiederholt. Es ist vorteilhaft, daß die jeweiligen Schlingen 11, wie beschrieben, verformt werden. Alternativ oder zusätzlich ist es auch möglich, auf der Oberseite der Mineralwollematten derartige Werkzeuge anzuordnen, wie dies in Figur 1 vereinfacht durch das Bezugszeichen 29 dargestellt ist. Es kann also auch alternativ oder zusätzlich jeweils das Drahtteil 13 verformt werden, welches sich auf der Oberseite der Mineralwollematte befindet.

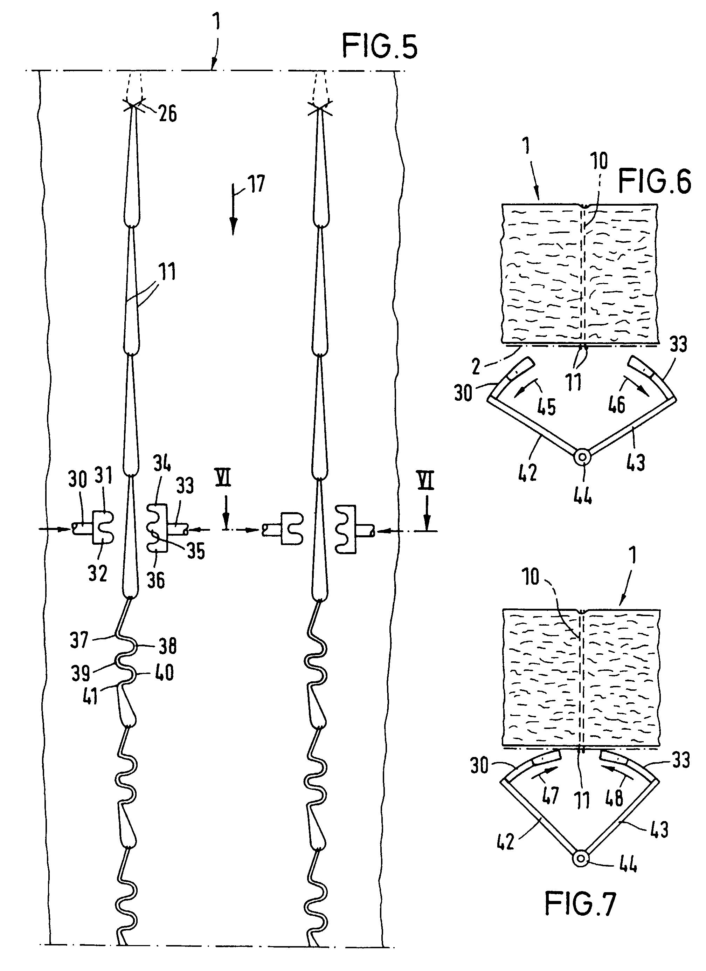

Die Figuren 5 bis 7 veranschaulichen ein anderes Ausführungsbeispiel der erfindungsgemäßen Vorrichtung, und zwar wird hierbei das mechanische Verformen durch Eingriff eines zangenartigen Werkzeuges vorgenommen, so daß die Nähdrahtteile wellenartig oder zickzackartig verformt werden. Das Verformen erfolgt zweckmäßigerweise so, daß die wellenartigen oder zickzackartigen Nähdrahtteile im wesentlichen in einer Ebene parallel zu einer der großen Oberflächen der Mineralwollebahn verlaufen. Dies ist für die Verpackung und für den Transport von Vorteil, weil die Drahtnetzmatten normalerweise werkseitig zu Rollen aufgewickelt und von einer Kunststoffolie umgeben werden, d.h. auf diese Weise wird eine Beschädigung der Kunststoffolie vermieden.

Wie in den Figuren 5 bis 7 vereinfacht dargestellt ist, sind die Werkzeuge bei diesem Ausführungsbeispiel zangenartig ausgebildet. Die Zangenbacken 30 und 33 sind mit gegenseitig ineinandergreifenden Vorsprüngen 31 und 32 bzw. 34, 35 und 36 versehen. Wenn die Zangenbacken mit ihren Vorsprüngen von den beiden Seiten her gegen den zu verformenden Nähdraht, z.B. eine Schlinge 11, gedrückt werden, so werden die Nähdrahtteile wellenartig oder zickzackartig verformt. Die Schlingen 11 erhalten auf diese Weise Bögen 37, 38, 39, 40 und 41. Die Zangenbacken 30 und 33 können mittels Zangenarmen 42 und 43 in je einem Schwenklager 44 gehalten sein. Bei entsprechender Ausbildung der Zangenbacken 30 und 33 sowie der Zangenarme 42, 43 und des Schwenklagers 44 ist eine Hin- und Herbewegung des Schwenklagers in Richtung auf die Mineralwollematte 1 nicht erforderlich, sondern nur ein Hin- und Herschwenken in Richtung der Pfeile 45, 46 bzw. 47 und 48.

Sowohl die Werkzeuge gemäß den Figuren 3 und 4 als auch diejenigen nach den Figuren 5 bis 7 werden zweckmäßigerweise von einem gemeinsamen Antrieb betätigt, der taktweise alle nebeneinander angeordneten Werkzeuge gleichzeitig betätigt. Der gemeinsame Antrieb für die Werkzeuge kann mit dem Antrieb einer mit Abstand vorgeschalteten Vielnadelnähmaschine verbunden sein, so daß sich auf diese Weise der Vorrichtungsaufwand vermindert. Die Werkzeuge sind aber, wie sich aus den Figuren 2 und 5 ergibt, mit Abstand von der Bildungsstelle 26 der Steppstiche angeordnet.

## Patentansprüche

1. Verfahren zum Annähen eines Drahtnetzes (2) an eine Mineralwollematte (1), wobei ein Nähdraht (9) je Naht in einem Steppstich jeweils unter Bildung einer Schlinge (11) durch die Mineralwollematte (1) und das Drahtnetz (2) geführt wird, dadurch gekennzeichnet, daß der Nähdraht (9) nach der Bildung der Steppstichnaht im Bereich der unteren / oder oberen großen Oberfläche der Mineralwollebahn (1) schrittweise derart mechanisch verformt wird, daß ein Auflösen der Steppstichnaht verhindert wird, wobei das mechanische Verformen durch das Verdrehen jeweils eines Nähdrahtteiles erfolgt.

2. Verfahren nach Anspruch 1, dadurch gekennzeichnet, daß das mechanische Verformen bei jedem aufeinanderfolgenden Steppstich vorgenommen wird.

3. Verfahren nach Anspruch 1 oder 2, dadurch gekennzeichnet, daß das Verdrehen der Nähdrahtteile im wesentlichen in einer Ebene parallel zu einer der großen Oberflächen der Mineralwollebahn (1) erfolgt.

4. Verfahren nach Anspruch 3, dadurch gekennzeichnet, daß das Verdrehen durch Eingriff eines gabelförmigen Welkzeuges vorgenommen wird.

5. Verfahren nach Anspruch 4, dadurch gekennzeichnet, daß das gabelförmige Werkzeug jeweils um einen Winkel von 200° bis 260°, vorzugsweise 220°, verdreht wird.

6. Verfahren nach einem der vorhergehenden Ansprüche, dadurch gekennzeichnet, daß das mechanische Verformen jeweils im mittleren Bereich jeder zuvor gebildeten Schlinge (11) vorgenommen wird.

7. Verfahren nach einem der vorhergehenden Ansprüche, dadurch gekennzeichnet, daß das mechanische Verformen mit Abstand von der Bildungsstelle des Steppstiches vorgenommen wird, so daß sich zwischen der Bildungsstelle und der Verformungsstelle mindestens mehrere Steppstiche befinden.

8. Verfahren nach einem der Ansprüche 1, 2 oder 7, dadurch gekennzeichnet, daß das mechanische Verformen durch Eingriff eines zangenartigen Werkzeuges vorgenommen wird, so daß die Nähdrahtteile wellenartig oder zickzackartig verformt sind.

9. Verfahren nach Anspruch 8, dadurch gekennzeichnet, daß die wellenartig oder zickzackartig verformten Nähdrahtteile im wesentlichen in einer Ebene parallel zu einer der großen Oberflächen der Mineralwollebahn (1) verlaufen.

10. Vorrichtung zur Durchführung des Verfahrens nach einem der Ansprüche 1 bis 9, dadurch gekennzeichnet, daß je Steppstichnaht im Bereich der unteren / oder oberen großen Oberfläche der Mineralwollebahn (1) ein Werkzeug angeordnet ist, welches derart gestaltet ist, daß der Nähdraht (9) schrittweise durch Verdrehen jeweils eines Nähdrahtteiles so mechanisch verformbar ist, daß ein Auflösen der Steppstichnaht verhindert wird.

11. Vorrichtung nach Anspruch 10, dadurch gekennzeichnet, daß die Werkzeuge quer zur Förderrichtung (17, 19) der Mineralwollebahn (1) nebeneinander den einzelnen Steppstichnähten zugeordnet sind, und daß ein gemeinsamer Antrieb für die Werkzeuge vorgesehen ist.

12. Vorrichtung nach Anspruch 10 oder 11, dadurch gekennzeichnet, daß die Werkzeuge Gabeln (20) mit Zinken (21, 22) aufweisen, die zu beiden Seiten des Nähdrahtes (11, 13) eingreifen und durch Drehen um die Gabelachse den Nähdraht verformen.

13. Vorrichtung nach Anspruch 12, dadurch gekennzeichnet, daß die Gabeln (20) mit ihren Zinken (21, 22) in Gabelachsrichtung (25) verschiebbar und um die Gabelachse (23) schwenkbar (24) angeordnet sind.

14. Vorrichtung nach Anspruch 10 oder 11, dadurch gekennzeichnet, daß die Werkzeuge zangenartig ausgebildet sind, und daß die Zangenbacken (30, 33) mit gegenseitig ineinandergreifenden Vorsprüngen (31, 32, 34, 35, 36) versehen sind, so daß die Nähdrahtteile (11) wellenartig (37 bis 41) oder zickzackartig verformbar sind.

15. Vorrichtung nach Anspruch 14, dadurch gekennzeichnet, daß die Zangenbacken (30, 33) mittels Zangenarmen (42, 43) in je einem Schwenklager (44) gehalten und mit einem gemeinsamen Antrieb verbunden sind.

16. Vorrichtung nach einem der Ansprüche 10 bis 15, dadurch gekennzeichnet, daß die Werkzeuge mit Abstand von der Bildungsstelle der Steppstiche angeordnet sind.

17. Vorrichtung nach einem der Ansprüche 11 bis 16, dadurch gekennzeichnet, daß der gemeinsame Antrieb für die Werkzeuge mit dem Antrieb einer mit Abstand vorgeschalteten Vielnadelnähmaschine verbunden ist.

## Claims

1. Method of binding a wire netting (2) to a mineral wool mat (1), wherein one binding wire (9) per stitched seam is passed in the fashion of a lock stitch, at each of which a loop (11) is formed, through said mineral wool mat (1) and said wire netting (2), characterized in that after the formation of the lock stitch seam said binding wire (9) is gradually mechanically deformed in the region of the lower and/or upper large surface of said mineral wool mat (1) in such a manner that the lock stitch seam is prevented from undoing, the said mechanical deformation being effected by respectively twisting one binding wire part.

2. Method according to claim 1, characterized in that said mechanical deformation is effected at each one of the successive lock stitches.

3. Method according to claim 1 or 2, characterized in that said twisting of the binding wire parts is substantially effected in a plane parallel to one of the large surfaces of said mineral wool mat (1).

4. Method according to claim 3, characterized in that said twisting is effected by the engagement of a fork-like tool.

5. Method according to claim 4, characterized in that said fork-like tool is respectively rotated by an angle of 200° to 260°, preferably 220°.

6. Method according to one of the preceding claims, characterized in that said mechanical deformation is respectively effected in the mid-portion of each of the previously formed loops (11).

7. Method according to one of the preceding claims, characterized in that said mechanical deformation is effected at a distance from the spot where the lock stitch is formed, so that there are at least plural lock stitches between said stitch forming spot and said deformation spot.

8. Method according to one of the claims 1, 2 or 7, characterized in that said mechanical deformation is effected by the engagement of a tongs-like tool, so that said binding wire parts are deformed in a wave-like or zigzag fashion.

9. Method according to claim 8, characterized in that said binding wire parts deformed in a wave-like or zigzag fashion substantially extend in a plane parallel to one of the large surfaces of said mineral mat (1).

10. Apparatus for carrying out the method according to one of the claims 1 to 9, characterized in that one tool is arranged for each lock stitch seam in the region of the lower and/or upper large surface of said mineral mat (1), which tool is designed in such a fashion that the binding wire (9) is, by respectively twisting one binding wire part, gradually mechanically deformable in such a manner that the lock stitch seam is prevented from undoing.

11. Apparatus according to claim 10, characterized in that said tools are assigned to the individual lock stitch seams transversely of the conveying direction (17, 19) of said mineral wool mat (1) in a side-by-side fashion, and that a common drive means is provided for said tools.

12. Apparatus according to claim 10 or 11, characterized in that said tools have forks (20) with prongs (21, 22) that engage at both sides of the binding wire (11, 13) and that deform said binding wire by rotating about the fork axis.

13. Apparatus according to claim 12, characterized in that said forks (20) with their prongs (21, 22) are arranged so as to be movable in the fork axis direction (25) and so as to be pivotable (24) about the fork axis (23).

14. Apparatus according to claim 10 or 11, characterized in that said tools are formed like tongs, and that the jaws (30, 33) of the tongs are provided with mutually engaging projections (31, 32, 34, 35, 36), so that the binding wire parts (11) are deformable in a wave-like (37 to 41) or zigzag fashion.

15. Apparatus according to claim 14, characterized in that the jaws (30, 33) of said tongs are each supported in a pivot bearing (44) by means of tongs arms (42, 43) and are connected to a common drive means.

16. Apparatus according to one of the claims 10 to 15, characterized in that said tools are arranged at distance from the spot where said lock stitches are formed.

17. Apparatus according to one of the claims 11 to 16, characterized in that said common tool drive means is connected to the drive means of a spaced-apart upstream multi-needle sewing machine.

## Revendications

1. Procédé de liage d'un treillis métallique (2) à un mat de laine minérale (1), un fil de fer d'attache (9) étant guidé par couture à travers le mat de laine minérale (1) et le treillis métallique (2) en un point noué respectivement en formant une boucle (11), caractérisé en ce que le fil de fer d'attache (9), après avoir formé la couture à points noués dans la zone de la grande surface inférieure/ou supérieure du lé de laine minérale (1), est déformé progressivement de manière mécanique de telle façon qu'il est empêché que la couture à points noués se défasse, la déformation mécanique étant effectuée par la torsion respectivement d'une partie du fil de fer d'attache.

2. Procédé selon la revendication 1, caractérisé en ce que la déformation mécanique est effectuée à chaque point noué consécutif.

3. Procédé selon la revendication 1 ou 2, caractérisé en ce que la torsion des parties de fil de fer d'attache se fait substantiellement dans un plan parallèle à l'une des grandes surfaces du lé de laine minérale (1).

4. Procédé selon la revendication 3, caractérisé en ce que la torsion est effectuée par l'intervention d'un outil en forme de fourche.

5. Procédé selon la revendication 4, caractérisé en ce que l'outil en forme de fourche est tordu respectivement d'un angle de 200° à 260°, de préférence de 220°.

6. Procédé selon l'une des revendications précédentes, caractérisé en ce que la déformation mécanique est effectuée respectivement dans la zone du milieu de chaque boucle (11) formée auparavant.

7. Procédé selon l'une des revendications précédentes, caractérisé en ce que la déformation mécanique est effectuée à un écart de l'endroit de formation du point noué si bien qu'au moins plusieurs points noués se trouvent entre l'endroit de formation et l'endroit de déformation.

8. Procédé selon l'une des revendications 1, 2 ou 7, caractérisé en ce que la déformation mécanique est effectuée par l'intervention d'un outil en forme de pince si bien que les parties de fil de fer d'attache sont déformées de manière ondulée ou à la manière d'un zigzag.

9. Procédé selon la revendication 8, caractérisé en ce que les parties de fil de fer d'attache déformées de manière ondulée ou à la manière d'un zigzag sont substantiellement dans un plan parallèlement à l'une des grandes surfaces du lé de laine minérale (1).

10. Dispositif pour exécuter le procédé selon l'une des revendications 1 à 9, caractérisé en ce qu'il est placé un outil par couture à points noués dans la zone de la grande surface inférieure / ou supérieure du lé de laine minérale, outil qui est configuré de telle manière que le fil de fer d'attache (9) peut être déformé mécaniquement progressivement par torsion de respectivement une partie du fil de fer d'attache de façon à qu'il soit empêché que la couture à points noués se défasse.

11. Dispositif selon la revendication 10, caractérisé en ce que les outils sont affectés les uns à côté des autres aux différentes coutures à points noués, transversalement par rapport au sens de transport (17, 19) du lé de laine minérale (1) et qu'un entraînement commun est prévu pour les outils.

12. Dispositif selon la revendication 10 ou 11, caractérisé en ce que les outils sont des fourches (20) avec des dents (21, 22) qui s'engrènent des deux côtés du fil de fer d'attache (11, 13) et qui déforment le fil de fer d'attache en tournant autour de l'axe de la fourche.

13. Dispositif selon la revendication 12, caractérisé en ce que les fourches (20) sont placées avec leurs dents (21, 22) mobiles dans le sens de l'axe de la fourche (25) et pivotantes (24) autour de l'axe de la fourche (23).

14. Dispositif selon la revendication 10 ou 11, caractérisé en ce que les outils sont configurés du type pince et que les becs de pince (30, 33) sont pourvus de saillies (31, 32, 34, 35, 36) s'engrenant mutuellement les unes dans les autres si bien que les parties de fil de fer d'attache (11) sont déformables de manière ondulée (37 à 41) ou à la manière d'un zigzag.

15. Dispositif selon la revendication 14, caractérisé en ce que les becs de pince (30, 33) sont maintenus au moyen de bras de pince (42, 43) dans respectivement un palier pivotant (44) et sont reliés à un entraînement commun.

16. Dispositif selon l'une des revendications 10 à 15, caractérisé en ce que les outils sont placés à un écart de l'endroit de formation des points noués.

17. Dispositif selon l'une des revendications 11 à 16, caractérisé en ce que l'entraînement commun pour les outils est relié à l'entraînement d'une machine à coudre à plusieurs aiguilles.
